# EUROPÄISCHE PATENTANMELDUNG

(11) **EP 1 094 122 A1**
(43) Veröffentlichungstag der Anmeldung: **25.04.2001**
(21) Anmeldenummer: 00810730.2
(22) Anmeldetag: 17.08.2000
(51) Int. Cl.: C22B 7/00, C22B 7/02, C22B 7/04, C22B 19/30, C22B 15/00, C21C 5/36, C21C 5/54

(54) **Verfahren zum Schmelzen von schwermetallhaltigen Reststoffen**

(30) Priorität: 01.10.1999 DE 19947343
(71) Anmelder: ABB (Schweiz) AG, 5401 Baden (CH)
(72) Erfinder: Carcer, Bruno, 5000 Aarau (CH); Rüegg, Hans, 5610 Wohlen (CH); Wieckert, Christian, 5703 Seon (CH)

(57) **Zusammenfassung**

Bei einem Verfahren zum Schmelzen von schwermetallhaltigen, insbesondere Zn-haltigen Stoffen (4), wobei die Stoffe (4) in einen als Schmelzofen (1) dienenden drehenden Konverter oder Drehrohrofen eingetragen und dort mittels eines mit einem höheren Sauerstoffanteil als Luft aufweisenden Gas oder Sauerstoff (6) und fossilen Brennstoffen (5) betriebenen Brenners (2) zu einer Schlacke (10) geschmolzen werden, und dabei Rauchgase (7) entstehen, werden der Brenner (2) und/oder die flüssige Schlacke (10) so stark reduktiv gefahren, dass das Zn in die Gasphase überführt wird, diese Gase die Schmelze verlassen und dabei mit dem Rauchgas (7) vermischt und ausgetragen werden. Enthalten die schwermetallhaltigen Stoffe (4) zusätzlich Cu wird zum Zwecke der Cu-Abreicherung der Schlacke (10) zusätzlich mit einem ständig flüssigem Fe-Regulus (13) gefahren. Die Schwermetallgehalte der Schlacke (10) sind so gering, dass die Schlacke (10) die geforderten Grenzwerte für Deponien unterschreitet.

## Beschreibung

### Technisches Gebiet

Die Erfindung betrifft ein Verfahren zum Schmelzen von schwermetallhaltigen Stoffen, insbesondere schwermetallhaltigen Reststoffen wie Filteraschen und Rostaschen aus der Hausmüllverbrennung, Hausmüll, Sondermüll, Erzen oder Reststoffen aus metallurgischen Prozessen.

### Stand der Technik

Es ist bekannt, schwermetallhaltige Reststoffe, wie z. B. Rost- oder Filterasche aus Müllverbrennungsanlagen, durch Schmelzen zu inertisieren.

Für eine freie Verwertung der erschmolzenen Schlacken ist es von Vorteil, wenn die Restgehalte an Schwermetallen nur noch gering sind, weil dann eine Umweltgefährdung durch Rest-Schwermetalle grundsätzlich ausgeschlossen werden kann. Ausserdem führt die mit dem Austrag aus der Schmelze verbundene höhere Anreicherung der Schwermetalle im Sekundärfilterstaub dazu, dass eine Rückgewinnung von Schwermetallen aus dem Sekundärfilterstaub kostenmässig wesentlich besser möglich ist.

Zwar fehlen für die freie Verwertung der erschmolzenen Schlacken in der Regel konkrete gesetzliche Vorschriften, jedoch gibt es in einigen Ländern Grenzwerte für Inhaltsstoffe, die für die Lagerung von Materialien auf einfachsten Deponien eingehalten werden müssen. In der Schweiz liegen beispielsweise diese Grenzwerte für Zn bei 1000 ppm, für Cu bei 500 ppm und für Pb bei 500 ppm.

Daher besteht im Hinblick auf die Verwertung des inertisierten Materials ein starker Bedarf an Schmelzverfahren, in denen die Schwermetalle entsprechend abgereichert werden. Bei der Mehrzahl der bisher bekannten thermischen Inertisierungsverfahren bleibt jedoch ein wesentlicher Teil der Schwermetalle in der entstehenden glasartigen Schlacke zurück.

Insbesondere Zink und Kupfer werden nur teilweise in die Gasphase überführt, weil die wichtigen Bindungsformen ZnO und CuO bei den üblichen Betriebstemperaturen niedrige Dampfdrücke aufweisen, die beim Einbinden in die silikatische Schlacke noch weiter reduziert werden. Metallisches Kupfer hat ebenfalls einen niedrigen Dampfdruck.

Die Abreicherung von Blei ist dagegen in der Regel unproblematisch, weil dieses relativ leicht in die Gasphase übergeht.

Um Zink dennoch abzureichern zu können, muss der Schmelzofen so reduktiv betrieben werden, dass ZnO zu atomarem Zn, das einen hohen Dampfdruck hat, reduziert wird.

Abhängig vom Einsatzstoff liegen die Cu-Gehalte auch ohne besondere Massnahmen hinreichend niedrig, etwa bei der Behandlung von Filterstaub.

Bekannt sind reduktiv arbeitende Schmelzverfahren, die in Lichtbogenöfen durchgeführt werden (F. G. Simon und J. Millard: "Ein Schmelzprozess für Aschen aus der Abfallverbrennung", Glasingenieur, (1997), S. 53-56). Hierbei erzwingt die Verwendung von Kohleelektroden eine stark reduktive Fahrweise. Nachteilig an diesem Verfahren ist, dass es mit elektrischer Energie arbeitet, hohe Energie- und Anlagekosten entstehen und es nicht ohne Metallphase betrieben werden kann. Ausserdem ist die Temperatur im Bereich des Lichtbogens extrem hoch, was tendenziell zu verstärkter Korrosion der Ausmauerung führt, da eine stabile Prozessführung schwierig ist.

### Darstellung der Erfindung

Die Erfindung versucht, diese Nachteile zu vermeiden. Ihr liegt die Aufgabe zugrunde, ein Verfahren zum Schmelzen von schwermetallhaltigen Stoffen vorzuschlagen, bei welchem die Stoffe effektiv und kostengünstig eingeschmolzen und gut durchmischt werden, sowie die Schwermetalle abgereichert und in einem separaten Produkt angereichert werden, so dass sie einer Wiederverwertung zugeführt werden können.

Erfindungsgemäss wird dies bei einem Verfahren gemäss Oberbegriff des Patentanspruches 1 dadurch erreicht, dass der Brenner und/oder die flüssige Schlacke so stark reduktiv gefahren werden, dass das Zn in die Gasphase überführt wird, diese Gase die Schlacke verlassen und dabei mit dem Rauchgas vermischt und ausgetragen werden.

Die Vorteile der Erfindung bestehen darin, dass durch Verwendung eines sich drehenden Schmelzofens eine gute Durchmischung erreicht wird, die sowohl für das Aufschmelzen und gegebenenfalls Harmonisieren des Materials als auch für das effektive Reagieren und Abdampfen, welches durch einen guten Stoffübergang in der Schmelze erreicht wird, von Bedeutung ist. Im Gegensatz zum Lichtbogenofen lässt sich die Reduktivität der Schmelze in einem weiten Bereich steuern, so dass eine Anpassung an die Notwendigkeiten des jeweiligen Einsatzstoffes leicht möglich ist. Weiterhin ist das Verfahren wegen des Einsatzes fossiler Brennstoffe relativ kostengünstig.

Es ist besonders zweckmässig, wenn mindestens ein Teil der einzuschmelzenden schwermetallhaltigen Stoffe in feinkörnigem Zustand direkt durch die Flamme des Brenners gefördert wird und mindestens teilweise bereits in der Flamme aufgeschmolzen wird. Dadurch kann die Energie direkt in das zu schmelzende Material eingebracht werden, so dass der Schmelzofen klein gehalten werden kann. Ausserdem ist vorteilhaft bei feinkörnigem Material mit grosser Oberfläche der Stoffübergang besonders gut.

Es ist von Vorteil, wenn die ausgetragenen schwermetallangereicherten Rauchgase abgekühlt und filtriert werden, wobei die Schwermetalle als Sekundärfilterstaub abgeschieden und aus dem Staub die Schwermetalle zurückgewonnen werden.

Weiterhin ist es für eine effektive Zink-Abreicherung zweckmässig, wenn die schwermetallhaltigen Rauchgase im Gegenstrom mit dem Schlackefluss abgezogen werden, da dann über dem ausfliessenden Schlackematerial der geringste Zn-Dampfdruck herrscht. Zusätzlich erlaubt ein Gegenstromprinzip bei Bedarf die Nachverbrennung der entstehenden Rauchgase noch im Ofen unmittelbar vor dem Gasaustritt.

Ausserdem ist es von Vorteil, wenn ein wesentlicher Teil der Schmelzenergie durch getrockneten Klärschlamm aufgebracht wird, wobei zur Trocknung des Klärschlammes zu einem erheblichen Teil der Energiegehalt der Rauchgase des Schmelzofens verwendet wird. Getrockneter Klärschlamm ist ein billiger Brennstoff. Das darin enthaltene SiO₂ verbessert zusätzlich die Glasqualität der Schlacke. Schliesslich ist dies eine günstige Möglichkeit zur Entsorgung des Klärschlammes.

Wenn neben Zn auch Cu speziell abgereichert werden soll, dann ist es von Vorteil, wenn der Schmelzofen mit einer Metallphase (Regulus) unter der Schlacke betrieben wird. Je nach Eingabegut und Reduktivität bildet sich diese von selbst oder wird durch Zugabe von Fe vorgelegt. In ihr sammelt sich neben weiterem Eisen aus dem eingetragenen Material auch das metallische Kupfer. Diese Metallfraktion kann periodisch durch Kippen des Konverters oder durch seitliche Abstichöffnungen im Schmelzofen abgestochen werden.

Schliesslich können vorteilhaft zwecks Erhöhung der Abreicherungsgeschwindigkeit des Zinks in das Gas und des Kupfers in das Metallbad kohlenstoffhaltige Stoffe, vorzugsweise Kohle und Koks, der Schlacke zugegeben werden. Auf diese Weise wird die Reduktivität weiter erhöht.

### Kurze Beschreibung der Zeichnung

In der Zeichnung sind zwei Ausführungsbeispiele der Erfindung dargestellt. Es zeigen:
- Fig. 1: eine schematische Darstellung des erfindungsgemässen Verfahrens in einer ersten Ausführungsvariante;
- Fig. 2: eine schematische Darstellung des erfindungsgemässen Verfahrens in einer zweiten Ausführungsvariante.

Es sind nur die für das Verständnis der Erfindung wesentlichen Elemente gezeigt.

### Weg zur Ausführung der Erfindung

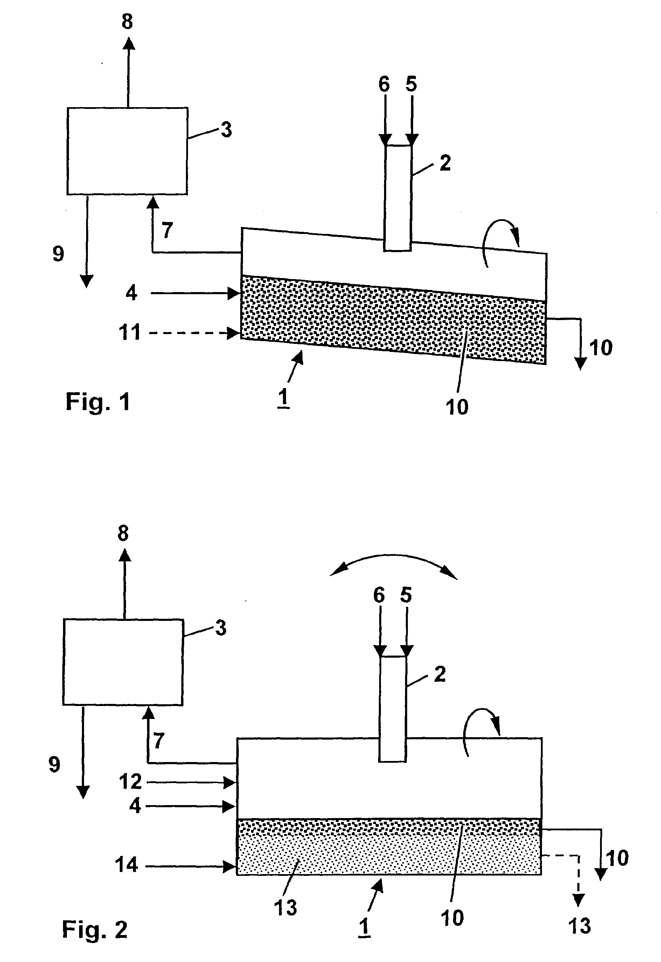

Nachfolgend wird die Erfindung anhand von Ausführungsbeispielen und der Fig. 1 und 2 näher erläutert.

Fig. 1 zeigt in schematischer Darstellung einen Schmelzofen 1, im vorliegenden Falle einen Drehrohrofen, dessen Drehrichtung durch einen gekrümmten Pfeil angedeutet ist. Der Drehrohrofen 1 ist mittels eines Brenners 2 beheizbar. Dem Drehrohrofen 1 ist ein Filter 3 nachgeordnet.

Der Drehrohrofen 1 wird über eine nicht dargestellte Beschickungsvorrichtung mit schwermetallhaltigen Stoffen 4, im vorliegenden Falle Reststoffen aus der Müllverbrennung, d.h. Filteraschen, beschickt. Diese werden zunächst mittels eines Brenners 2, der mit Brennstoff 5, hier Erdgas, und mit Sauerstoff 6 betrieben wird, oxidativ aufgeschmolzen. Nur ein Teil der Schwermetalle wird dabei in die Gasphase überführt, z. B. das als ZnCl₂ gebundene Zn, etwa die Hälfte des Zinks und des Kupfers bleiben unter diesen Bedingungen in der aufgeschmolzenen Schlacke zurück. Es sind folgende Schwermetallgehalte in der oxidativ erschmolzenen Schlacke vorhanden:
9800 ppm Zn
500 ppm Cu
300 ppm Pb.

Anschliessend wird der Brenner 2 für etwa 3 Stunden reduktiv mit einer Luftzahl von 0.75 betrieben, wobei die Temperatur im Ofen etwa 1500 °C beträgt. Unter diesen Bedingungen wird das in der Schlacke noch vorhandene Zn (neben Pb und Cu) in die Gasphase überführt. Diese Gase verlassen die flüssige Schlacke und mischen sich mit den Rauchgasen 7, so dass diese mit Schwermetallen angereichert werden.

Je nach beabsichtigtem Verwendungszweck ist es möglich, aus der flüssigen Schlacke eine Schaumschlacke herzustellen.

In der Tabelle sind die Schwermetallgehalte (in ppm) in der Schlacke 10 in Abhängigkeit von der reduktiven Betriebszeit des Brenners (in Stunden) dargestellt:

| | | | | | | | |
|---|---|---|---|---|---|---|---|
| Zeit (h) | 0 | 0.5 | 1 | 1.5 | 2 | 2.5 | 3 |
| Zn (ppm) | 9800 | 4500 | 2100 | 1200 | 650 | 450 | 300 |
| Pb (ppm) | 300 | | | | | | <100 |
| Cu (ppm) | 500 | | | | | | 400 |

Die Schlacke 10 weist somit nach der 3-stündigen reduktiven Behandlungsdauer Schwermetallgehalte (Zn, Cu, Pb) auf, die wesentlich geringer sind als die in der Schweiz geforderten Grenzwerte. Mit dem erfindungsgemässen Verfahren ist es daher möglich, den Endgehalt an Zn in der Schlacke 10 immer unter 1000 ppm und den Endgehalt an Cu unter 500 ppm zu halten. Pb-Gehalte unter 500 ppm zu erhalten ist unproblematisch, weil Pb relativ leicht in die Gasphase übergeht.

Durch die Verwendung eines drehenden Schmelzofens 1 wird eine gute Durchmischung erreicht, die sowohl für das Aufschmelzen und Homogenisieren der Stoffe 4 als auch für das effektive Reagieren und Abdampfen infolge des guten Stoffüberganges in der Schmelze sehr vorteilhaft ist. Zusätzlich lässt sich die Reduktivität der Schmelze in einem weiten Bereich steuern, so dass eine Anpassung an die jeweils eingesetzten Stoffe leicht möglich ist.

Die schwermetallangereicherten Rauchgase 7 werden aus dem Ofen 1 im Gegenstromprinzip im Vergleich zur Flussrichtung der Schlacke 10 abgezogen, abgekühlt und in einen Filter 3 geleitet, in welchem die Schwermetallpartikel abgeschieden und als Sekundärfilterstaub 9 ausgetragen werden. Die Anwendung des Gegenstromprinzipes hat den Vorteil, dass über dem ausfliessenden Schlackematerial der geringste Zn-Dampfdruck herrscht. Zusätzlich erlaubt das Gegenstromprinzip bei Bedarf die Nachverbrennung der entstehenden Rauchgase 7 noch im Ofen 1 unmittelbar vor dem Gasaustritt.

Eine Zurückgewinnung und Wiederverwertung der Schwermetalle aus dem Sekundärfilterstaub 9 ist aufgrund der hohen Konzentration relativ kostengünstig möglich.

Wie in Fig. 1 mit einer gestrichelten Linie dargestellt ist, können zusätzlich Additive 11 in den Schmelzofen 1 eingebracht werden. Die Schmelzeigenschaften, wie Viskosität, Oberflächenspannung oder Redoxzustand der Schlacke 10 können mit diesen Additiven 11 gezielt beeinflusst werden. Diese Eigenschaften sind je nach dem zu erzeugenden Produkt wichtig. Entsprechend hängt die Wahl der Additive 11 vom gewünschten Produkt ab.

Fig. 2 zeigt ein weiteres Ausführungsbeispiel der Erfindung. Als Schmelzofen 1 dient hier ein kippbarer liegender Drehkonverter (Bewegungsrichtung ist mit Pfeilen angedeutet) mit einem Innendurchmesser von 30 cm und einer Länge von 80 cm. Diesem Drehkonverter 1 werden als schwermetallhaltige Stoffe 4 Rostasche (Anteil kleiner 30 mm) und Filterasche aus einer Müllverbrennungsanlage zugegeben, wobei auf 10 Teile Rostasche 1 Teil Filterasche kommt. Bei einer Temperatur von 1500 °C wird aus diesen Stoffen mittels eines Brenners 2 unter oxidativen Bedingungen eine Schlacke 10 erschmolzen. Dieser heissen Schlacke 10 werden nun 10 kg metallisches Eisen 14 zugegeben und die Brennerheizung wird reduktiv (Luftzahl 0.8) eingestellt. Ausserdem werden alle 6 Minuten 500 g Kohle als kohlenstoffhaltige Stoffe 12 zudosiert, um die Schmelze möglichst reduktiv zu fahren. Durch die Zugabe des Eisens 14 wird ein flüssiger Regulus 13 vorgelegt, welcher durch Kippen des Konverters 1 periodisch entfernt wird.

Im Fe-Regulus 13 sammelt sich auch das aus dem eingetragenen Material 4 stammende und das durch die Reduktion von CuO entstehende metallische Kupfer.

Wie beim oben beschriebenen ersten Ausführungsbeispiel werden die schwermetallangereicherten Rauchgase 7 aus dem Ofen 1 im Gegenstromprinzip im Vergleich zur Flussrichtung der Schlacke 10 abgezogen, abgekühlt und in einen Filter 3 geleitet, in welchem die Schwermetallpartikel abgeschieden und als Sekundärfilterstaub 9 ausgetragen werden.

Aus der silikatischen Schmelze (Schlacke 10) werden alle 30 Minuten Proben entnommen und die Gehalte an Schwermetallen bestimmt. Die Resultate sind in Abhängigkeit von der Behandlungsdauer in der nachfolgenden Tabelle dargestellt:

| | | | | | |
|---|---|---|---|---|---|
| Zeit (h) | 0 | 0.5 | 1 | 1.5 | 2 |
| Zn (ppm) | 1300 | 1000 | 850 | 700 | 600 |
| Pb (ppm) | 500 | 300 | 200 | 150 | 150 |
| Cu (ppm) | 2200 | 1200 | 850 | 500 | 350 |

Die Schlacke 10 weist somit nach der 2-stündigen reduktiven Behandlungsdauer Schwermetallgehalte (Zn, Cu, Pb) auf, die wesentlich geringer sind als die in der Schweiz geforderten Grenzwerte.

Selbstverständlich ist die Erfindung nicht auf die beschriebenen Ausführungsbeispiele beschränkt. Von besonderem Vorteil ist es, wenn mindestens ein Teil der einzuschmelzenden schwermetallhaltigen Stoffe 4 in feinkörnigem Zustand direkt durch die Flamme des Brenners 2 gefördert wird und mindestens teilweise bereits in der Flamme aufgeschmolzen wird. Durch das feinkörnige Material wird eine grosse Oberfläche realisiert, dadurch wird der Stoffübergang besonders gut. Weil die Energie direkt in das zu schmelzende Material eingebracht wird, kann der Schmelzofen 1 klein gehalten werden. Weiterhin ist es vorteilhaft, wenn die flüssige Schlacke 10 kontinuierlich aus dem Schmelzofen 1 ausgetragen wird.

Als Brennstoffe 5 sind alle fossilen gasförmigen, flüssigen und festen Brennstoffe geeignet, wie z. B. Erdgas, Öl, Kohlestaub, getrockneter Klärschlamm oder Mischungen daraus. Eine vorteilhafte Variante besteht beispielsweise darin, einen wesentlichen Teil der Schmelzenergie durch getrockneten Klärschlamm aufzubringen wird, wobei zur Trocknung des Klärschlammes zu einem erheblichen Teil der Energiegehalt der Rauchgase des Schmelzofens verwendet wird. Getrockneter Klärschlamm ist ein billiger Brennstoff. Das darin enthaltene SiO₂ verbessert zusätzlich die Glasqualität der Schlacke. Schliesslich ist dies eine günstige Möglichkeit zur Entsorgung des Klärschlammes.

### Bezugszeichenliste

- 1: Schmelzofen (Konverter, Drehrohrofen)
- 2: Brenner
- 3: Filter
- 4: Schwermetallhaltige Stoffe
- 5: Brennstoff (z. B. Erdgas, Öl, Kohlestaub, getrockneter Klärschlamm)
- 6: Sauerstoff, sauerstoffangereichertes Gas
- 7: Schwermetallangereicherte Rauchgase
- 8: Abgas
- 9: Sekundärfilterstaub
- 10: Schlacke
- 11: Additive
- 12: Kohlenstoffhaltige Stoffe
- 13: Regulus
- 14: Eisen

## Patentansprüche

1. Verfahren zum Schmelzen von schwermetallhaltigen, insbesondere Zn-haltigen Stoffen (4), wobei die Stoffe (4) in einen als Schmelzofen (1) dienenden drehenden Konverter oder Drehrohrofen eingebracht und dort mittels eines mit einem höheren Sauerstoffanteil als Luft aufweisenden Gas oder Sauerstoff (6) und fossilen Brennstoffen (5) betriebenen Brenners (2) zu einer Schlacke (10) geschmolzen werden, und dabei Rauchgase (7) gebildet werden, dadurch gekennzeichnet, dass der Brenner (2) und/oder die flüssige Schlacke (10) so stark reduktiv gefahren werden, dass das Zn in die Gasphase überführt wird, diese Gase die Schmelze verlassen und dabei mit dem Rauchgas (7) vermischt und ausgetragen werden.

2. Verfahren nach Anspruch 1, dadurch gekennzeichnet, dass mindestens ein Teil der einzuschmelzenden schwermetallhaltigen Stoffe (4) in feinkörnigem Zustand direkt durch die Flamme des Brenners (2) gefördert wird und mindestens teilweise bereits in der Flamme aufgeschmolzen wird.

3. Verfahren nach Anspruch 1 oder 2, dadurch gekennzeichnet, dass die ausgetragenen schwermetallangereicherten Rauchgase (7) abgekühlt und filtriert werden, wobei die Schwermetalle als Sekundärfilterstaub (9) abgeschieden werden.

4. Verfahren nach Anspruch 3, dadurch gekennzeichnet, dass die Schwermetalle aus dem Sekundärfilterstaub (9) zurückgewonnen werden.

5. Verfahren nach Anspruch 1, dadurch gekennzeichnet, dass die Schlacke (10) kontinuierlich ausgetragen wird.

6. Verfahren nach Anspruch 1, dadurch gekennzeichnet, dass die schwermetallhaltigen Rauchgase (7) im Gegenstrom mit dem Schlackefluss abgezogen werden.

7. Verfahren nach Anspruch 1, dadurch gekennzeichnet, dass aus der Schlacke (10) eine Schaumschlacke hergestellt wird.

8. Verfahren nach Anspruch 1, dadurch gekennzeichnet, dass der Schlacke (10) geeignete Additive (11) zugegeben werden, durch welche in Abhängigkeit vom zu erzeugenden Produkt die Schmelzeigenschaften, vorzugsweise Viskosität, Oberflächenspannung, Redoxzustand einstellt werden.

9. Verfahren nach Anspruch 1, dadurch gekennzeichnet, dass ein wesentlicher Teil der Schmelzenergie durch getrockneten Klärschlamm aufgebracht wird.

10. Verfahren nach Anspruch 9, dadurch gekennzeichnet, dass zur Trocknung des Klärschlammes zu einem erheblichen Teil der Energiegehalt der Rauchgase des Schmelzofens verwendet wird.

11. Verfahren nach Anspruch 1 oder 2, wobei die schwermetallhaltigen Stoffe (4) zusätzlich Cu enthalten, dadurch gekennzeichnet, dass zum Zwecke der Cu-Abreicherung der Schlacke (10) mit einem ständig flüssigem Fe-Regulus (13) gefahren wird.

12. Verfahren nach Anspruch 11, dadurch gekennzeichnet, dass der Regulus (13) durch Zugabe von Eisen (14) vorgelegt wird.

13. Verfahren nach Anspruch 11 oder 12, dadurch gekennzeichnet, dass mindestens ein Teil des Regulus (13) durch Kippen des Konverters oder durch seitliche Abstichöffnungen im Schmelzofen (1) periodisch ausgetragen wird.

14. Verfahren nach einem der Ansprüche 1, 2, 11, dadurch gekennzeichnet, dass zwecks Erhöhung der Abreicherungsgeschwindigkeit des Zn und des Cu kohlenstoffhaltige Stoffe (12), vorzugsweise Kohle und Koks, der Schlacke (10) zugegeben werden.
